# EUROPEAN PATENT APPLICATION

(11) **EP 4 708 587 A1**
(43) Date of publication of application: **11.03.2026**
(21) Application number: 25163564.5
(22) Date of filing: 13.03.2025
(51) Int. Cl.: H01R 13/72, H02G 11/02

(54) **ELECTRICAL CONNECTOR ASSEMBLY FOR FURNITURE PIECE**

(30) Priority: 06.09.2024 CN 202411252988; 06.09.2024 US 202463188268 P
(71) Applicant: Emomo Tech (Zhejiang) Co., Ltd, Huzhou, Zhejiang 313000 (CN)
(72) Inventor: ZHAO, YUSHU, HUZHOU, 313000 (CN); TANG, WENJI, HUZHOU, 313000 (CN); SONG, JING, HUZHOU, 313000 (CN); ZHOU, WEI, HUZHOU, 313000 (CN); YANG, JUN, HUZHOU, 313000 (CN); LIU, GUANGHUI, HUZHOU, 313000 (CN)
(74) Representative: Metida

(57) **Abstract**

An electrical connector assembly for use with a furniture piece may include a first housing defining a recess and a power cord having a cord first end and switchable between a retracted state and an extended state. The cord first end may include a first electrical connector. In the retracted state, the cord first end may be positioned within the recess. In the extended state, the cord first end may be extended at least partially outside of the recess.

## Description

### BACKGROUND

This disclosure relates generally to furniture pieces with electrical connections. More specifically, this disclosure relates to furniture pieces with electrical connections including at least one power connection provided on a retractable cord. Typically, providing a power connection and/or charging an electronic device including (but not limited to) mobile devices such as smartphones, tablets, laptop or portable computers, and Bluetooth devices, or other electronic device while a user is, e.g., in a bed (or generally sitting on, in, or at other furniture piece) requires the user to locate a standard power source such as a wall outlet within a proximity of the furniture piece, such that the user can extend a charging or power cord between the furniture piece and the power source. For purposes of brevity in this disclosure, reference to "charging" or a "charger" is understood to include power cords and the like.

In addition to the need to find a power source close enough to the furniture piece such that a power cord is capable of comfortably and safely extending to the furniture piece, having one or multiple power cords extending across a floor or other space to a furniture piece reduces clean and organized aesthetics of the space and creates a tripping hazard. Further, using a power source located next to a bed, for example, requires a user to plug one or more additional components into the power source which is typically a standard wall outlet next to the bed and may already contain several electrical connections for, e.g., a lamp, alarm clock, audio device, etc. Accessing the power source may also be cumbersome if it is located next to or behind the furniture piece and if multiple types of connections are desired users run the risk of overloading wall outlets and having a tangle of cords, which is potentially dangerous and not aesthetically pleasing.

Further, conventional charging ports must be stored away when not in use, to avoid a messy appearance, especially when several types of charging interfaces are required in the same location. Users may also need to "find an outlet" and have appropriate charging components for a particular device.

Accordingly, there may be a need for a charging cord solution that is both accessible from a furniture piece, convenient to use, easy and efficient to store, and has little impact on aesthetics of the furniture piece.

### BRIEF SUMMARY

An exemplary embodiment of an electrical connector assembly for use with a furniture piece may include a first housing defining a recess and a power cord having a cord first end and switchable between a retracted state and an extended state. The cord first end may include a first electrical connector. In the retracted state, the cord first end may be positioned within the recess. In the extended state, the cord first end may be extended at least partially outside of the recess.

An exemplary embodiment of a furniture piece may include a power source, a furniture piece surface, and an electrical connector assembly inserted into the furniture piece surface. The electrical connector assembly may include a first housing defining a recess and a power cord having a cord first end and switchable between a retracted state and an extended state. The cord first end may include a first electrical connector. The power cord may be electrically coupled to the power source. In the retracted state, at least a portion of the cord first end may positioned within the recess. In the extended state, the cord first end may be extended at least partially outside of the recess.

### BRIEF DESCRIPTION OF THE SEVERAL VIEWS OF THE DRAWINGS

A more particular description will be rendered by reference to exemplary embodiments that are illustrated in the accompanying figures. Understanding that these drawings depict exemplary embodiments and do not limit the scope of this disclosure, the exemplary embodiments will be described and explained with additional specificity and detail through the use of the accompanying drawings in which:
FIG. 1 is a schematic diagram of a furniture piece having an electrical connector assembly according to an exemplary embodiment;
FIG. 2 is a cross sectional schematic view of a furniture piece having an electrical connector assembly according to an exemplary embodiment;
FIG. 3A is an exploded view of an electrical connector assembly according to an exemplary embodiment;
FIG. 3B is a cutaway view of an electrical connector assembly according to an exemplary embodiment;
FIG. 4 is a perspective view of a first housing according to an exemplary embodiment;
FIG. 5 is a cutaway view of an electrical connector assembly according to an exemplary embodiment;
FIG. 6 is a cutaway view of an electrical connector assembly according to an exemplary embodiment;
FIG. 7 is a perspective view of a second housing according to an exemplary embodiment;
FIG. 8 is a perspective view of a cover plate according to an exemplary embodiment;
FIG. 9 is an exploded view of an electrical connector assembly according to an exemplary embodiment;
FIG. 10 is a top, right, front perspective view of an electrical connector assembly according to an exemplary embodiment;
FIG. 11 is a bottom, left, front perspective view of an electrical connector assembly according to an exemplary embodiment;
FIG. 12 is a bottom, right, front perspective view of an electrical connector assembly according to an exemplary embodiment;
FIG. 13 is a top plan view of an electrical connector assembly according to an exemplary embodiment;
FIG. 14 is a bottom plan view of an electrical connector assembly according to an exemplary embodiment;
FIG. 15 is a front elevated view of an electrical connector assembly according to an exemplary embodiment;
FIG. 16 is a rear elevated view of an electrical connector assembly according to an exemplary embodiment;
FIG. 17 is a left side elevated view of an electrical connector assembly according to an exemplary embodiment;
FIG. 18 is a right side elevated view of an electrical connector assembly according to an exemplary embodiment,
FIG. 19 is a top, right, front perspective view of an electrical connector assembly according to an exemplary embodiment;
FIG. 20 is a lower, right, rear, perspective view of an electrical connector assembly according to an exemplary embodiment;
FIG. 21 is a lower, left, front, perspective view of an electrical connector assembly according to an exemplary embodiment;
FIG. 22 is a top plan view of an electrical connector assembly according to an exemplary embodiment;
FIG. 23 is a bottom plan view of an electrical connector assembly according to an exemplary embodiment;
FIG. 24 is a front elevated view of an electrical connector assembly according to an exemplary embodiment;
FIG. 25 is a rear elevated view of an electrical connector assembly according to an exemplary embodiment;
FIG. 26 is a left side elevated view of an electrical connector assembly according to an exemplary embodiment; and
FIG. 27 is a right side elevated view of an electrical connector assembly according to an exemplary embodiment.

Various features, aspects, and advantages of the exemplary embodiments will become more apparent from the following detailed description, along with the accompanying drawings in which like numerals represent like components throughout the figures and detailed description. The various described features are not necessarily drawn to scale in the drawings but are drawn to aid in understanding the features of the exemplary embodiments.

The headings used herein are for organizational purposes only and are not meant to limit the scope of the disclosure or the claims. To facilitate understanding, reference numerals have been used, where possible, to designate like elements common to the figures.

### DETAILED DESCRIPTION

Reference will now be made in detail to various exemplary embodiments. Each example is provided by way of explanation and is not meant as a limitation and does not constitute a definition of all possible embodiments. It is understood that reference to a particular "exemplary embodiment" of, e.g., a structure, assembly, component, configuration, method, etc. includes exemplary embodiments of, e.g., the associated features, subcomponents, method steps, etc. forming a part of the "exemplary embodiment."

For purposes of this disclosure, the phrases "devices," "systems," and "methods" may be used either individually or in any combination referring without limitation to disclosed components, grouping, arrangements, steps, functions, or processes.

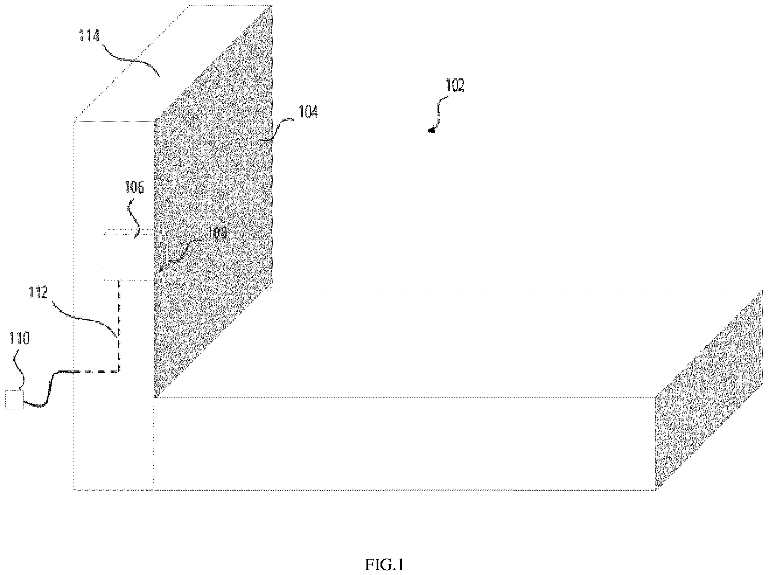

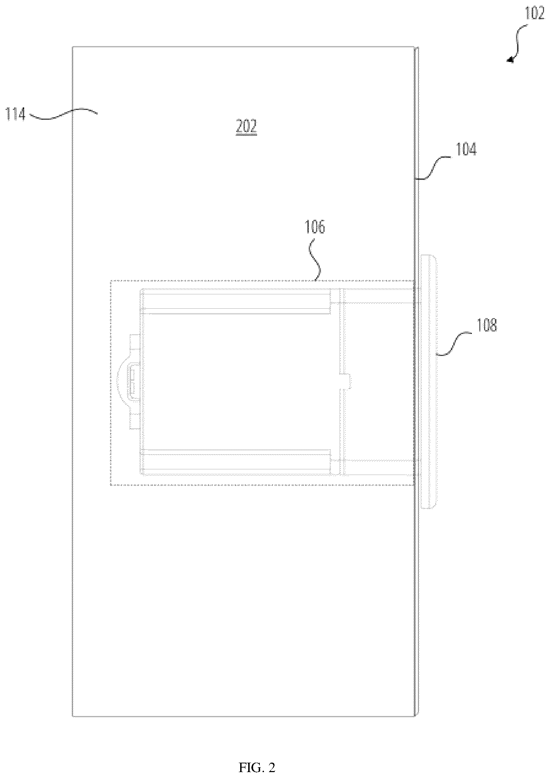

FIG. 1 and FIG. 2 illustrate an exemplary embodiment of a furniture piece 102 having an electrical connector assembly 106. The furniture piece 102 may include a furniture piece surface 104 into which the electrical connector assembly 106 is inserted. The furniture piece 102 may further include a power source 110 electrically coupled to the electrical connector assembly 106, for example via wiring 112. In an exemplary embodiment, the power source 110 may be a corded power plug the connects to a standard wall outlet. Alternatively, the power source 110 may be a configured as a power box that is connected to a wall outlet via a power cord or other suitable connection. In an alternative embodiment, the power source 110 may instead be a power cord from the electrical connector assembly 106 itself for connecting directly to an outlet without drawing power through the furniture piece 102. This may allow the electrical connector assembly 106 to be retrofit onto an existing furniture piece 102 that is not powered.

The electrical connector assembly 106 may include one or more housings that form, e.g., a base portion of the electrical connector assembly 106. The housings may be configured generally as a portion or piece of an assembly within which other components are positioned or received, consistent with this disclosure.

In FIG. 1 and FIG. 2, the furniture piece 102 is a bed having a headboard 114, but it will be understood that the disclosure is not limited to a bed. For example, in an alternative embodiment the furniture piece 102 may be a chair, couch, table, dresser, or any other type of furniture consistent with the disclosure. Further, in FIG. 1 and FIG. 2, the furniture piece surface 104 is a vertical surface, but it will be understood that the disclosure is not limited to vertical surfaces and that the electrical connector assembly 106 may be inserted into other surfaces such as horizontal or slanted surfaces.

A visible portion 108 of the electrical connector assembly 106 may be positioned accessibly and aesthetically on the furniture piece surface 104. The electrical connector assembly 106 may be installed such that at least a portion of the electrical connector assembly 106 may be inserted into the furniture piece surface 104 and positioned within an interior 202 of the furniture piece 102, such as within an interior framing (not shown) or other known assemblies for the furniture piece 102.

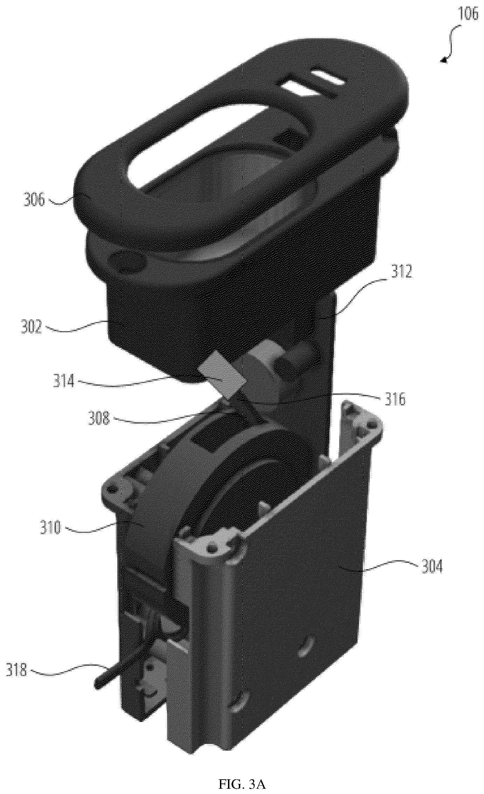

With reference to FIG. 3A, the electrical connector assembly 106 may include a first housing 302, a second housing 304, and a cover plate 306. The second housing 304 may include a cord retractor 310 and a circuit board 312 provided within the second housing 304. The cord retractor 310 may store at least a portion of a power cord 308. The power cord 308 may include a first electrical connector 314 provided at a cord first end 316 of the power cord 308. The first electrical connector 314 may be any type of connector suitable for connecting to an electronic device, including, but not limited to, USB-A, USB-B, USB-C, micro-USB, Lightning connector, and/or the like. Additionally, the first electrical connector 314 may include multiple types of connectors at the cord first end 316 of the power cord 308 so as to accommodate multiple different types of devices.

The first housing 302 and the second housing 304 may be formed integrally-i.e., injection molded as a single piece-or assembled from separate pieces that may be secured to each other or separable, or having difference sizes and/or geometries. In FIG. 3A, the first housing is shown as a single piece and the second housing 304 is shown comprising two separate pieces, but it will be understood that the disclosure is not limited to this. For example, first housing 302 may comprise multiple pieces and the second housing 304 may be molded as a single piece.

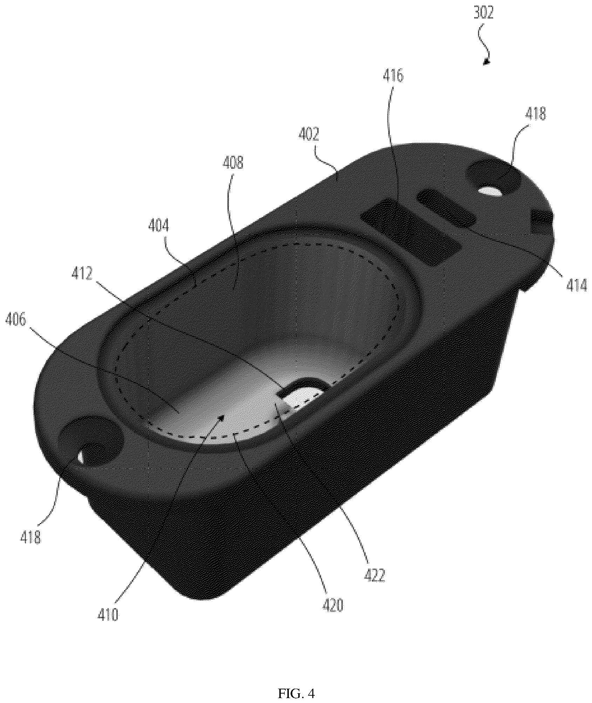

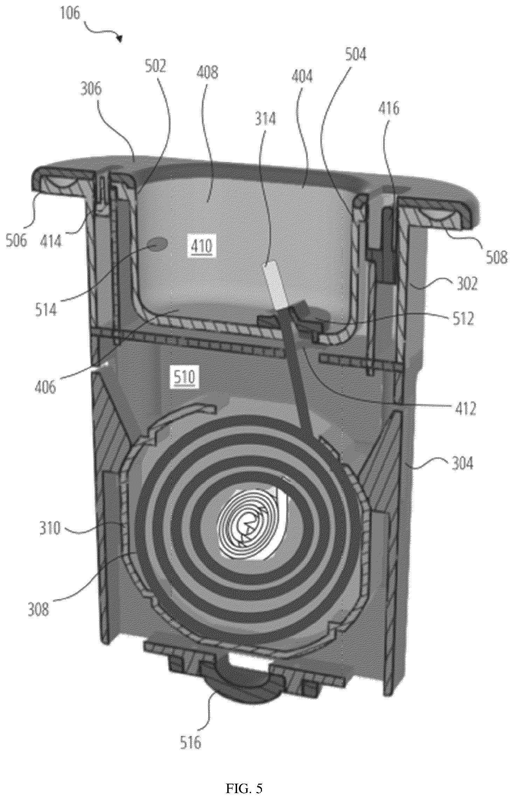

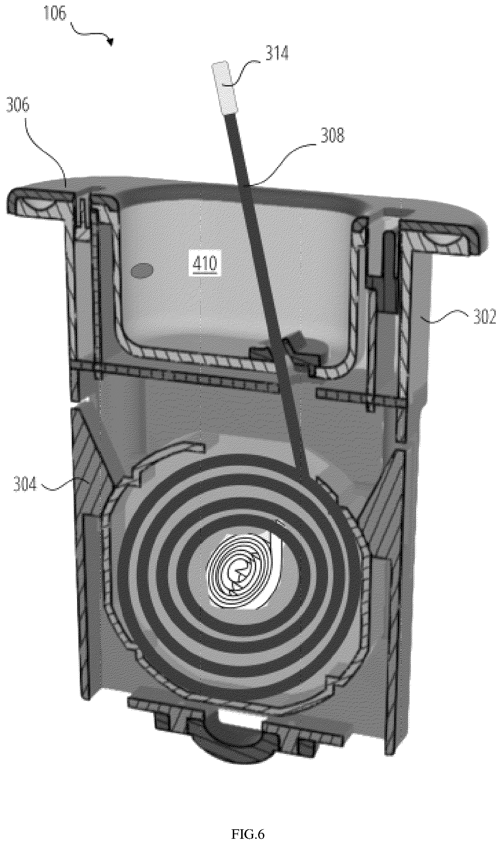

The power cord 308 may be switchable between a retracted state (see FIG. 5), in which a majority of the power cord 308 is stored within the second housing 304 and an extended state (see FIG. 6) in which the power cord 308 is extended from the electrical connector assembly 106 to an exterior of the electrical connector assembly 106. In the extended state, the cord first end 316 may be extended at least partially outside of a recess 410 (see FIG. 4). The cord retractor 310 may be operable to permit the power cord 308 to extend out of and away from the electrical connector assembly 106 to the extended state. Subsequently, the cord retractor 310 may retract the power cord 308 from the extended state to the retracted state. The cord retractor 310 may include a spring-loaded and/or ratcheting mechanism configured to allow extension of the power cord 308, stopping extension of the 308, locking the power cord 308 at a predetermined position, and/or allowing retraction upon pulling the power cord 308. For example, the cord retractor 310 may be operable to allow extension of the power cord 308 in response to a steady application of pulling force by a user. Once the user stops the application of pulling force, the cord retractor 310 may lock the power cord 308 in place. Subsequently, in response to a short tug of the power cord 308 by the user, the cord retractor 310 may retract the power cord 308 to the retracted state.

The electrical connector assembly 106 may further include a power source connector 318 configured to couple to the power source 110 of the furniture piece 102 (or, alternately, a stand-alone power source 110) and supply electrical power to the power cord 308 and the first electrical connector 314. In an exemplary embodiment, the power source connector 318 extends from the second housing 304 to connect to the power source 110, for example through the wiring 112. The power source connector 318 may be in electrical communication with the circuit board 312, which may include components to modify the electrical power to a suitable voltage and/or current before transmitting the electrical power to the power cord 308 and thereby the first electrical connector 314.

With reference to FIG. 3A, the power source connector 318 may extend into an interior of the second housing 304 within which it may be routed around one or more support drums 320 and electrically connected to a circuit board power input 322 on the circuit board 312. The support drums 320 may secure the power source connector 318 so that tension on the power source connector 318 will not disconnect the power source connector 318 from the circuit board power input 322. The support drums 320 may also help to support the power source connector 318 so that tension and/or movement does not cause damage against the power source connector 318, for example, by helping to prevent wear of the power source connector 318 against an edge of the second housing 304 or the furniture piece 102.

FIG. 4 shows an exemplary embodiment of the first housing 302. The first housing 302 may include an outer surface 402. The outer surface 402 may have an interior edge 404 defining a recess opening 420. It will be understood that the broken line shown in FIG. 4 is not part of the structure of the electrical connector assembly 106 and is instead intended as an approximation of the recess opening 420; the broken line is not intended to limit the definition or bounds of the recess opening 420 in any way. In an exemplary embodiment, the interior edge 404 may be beveled or rounded so as to reduce possible damage to the power cord 308.

The first housing 302 may further include a recess surface 406 displaced from the outer surface 402 in a first direction. In an exemplary embodiment, the outer surface 402 may be substantially parallel to the recess surface 406, but it will be understood that the disclosure is not limited to this. A recess wall 408 may extend between the outer surface 402 and the recess surface 406. The recess surface 406 and the recess wall 408 may define the recess 410. In an exemplary embodiment, the recess surface 406 may be substantially perpendicular to the outer surface 402 and the recess surface 406, but it will be understood that the disclosure is not limited to this. For example, the recess 410 in certain embodiments may be bowl-shaped such that the recess surface 406 is a curved or arcuate surface forming a bottom surface of the bowl from which, e.g., the recess wall 408 extends from the recess surface 406 to the outer surface 402 in a curved or arcuate configuration.

A cord opening 412 may be provided in the recess surface 406 so that the power cord 308 can extend from the second housing 304, through the cord opening 412, and into the recess 410 of the first housing 302. In the retracted state, the first electrical connector 314 may be positioned at least partially within the recess 410. Depending on the dimensions of the first electrical connector 314, at least a portion of the first electrical connector 314 may extend from the recess in the retracted state and/or the power cord 308 may extend slightly from the recess 410 in the retracted state. A portion of the recess surface 406 adjacent to the cord opening 412 may be formed to bow or curve inwardly into the recess 410 and thereby form a positioning portion 422 dimensioned for angling the first electrical connector 314 extending through the cord opening 412 at a predetermined angle into the recess 410. In an aspect, the predetermined angle may position the first electrical connector 314 aesthetically and accessibly within the recess 410 when the power cord 308 is in the retracted state. In addition, the recess opening 420 may contribute to smoothly moving the power cord 308 through the cord opening 412 at a desired angle when the power cord 308 is moving between the retracted state and the extended state and providing an abutment for preventing the first electrical connector 314 from being retracted through the cord opening 412.

In an exemplary embodiment, at least one of the first electrical connector 314 and the first housing 302 may include a magnet, and the other of the first electrical connector 314 and the first housing 302 may include a metal or otherwise magnetically active material. In this configuration, the first electrical connector 314 may be magnetically coupled to a surface of the first housing 302 to retain the first electrical connector 314 in convenient position when not in use.

The first housing 302 may further include a second electrical connector 414 and a third electrical connector 416. In an exemplary embodiment, the second electrical connector 414 and the third electrical connector 416 may be accessible through the outer surface 402. The second electrical connector 414 and the third electrical connector 416 may be any type of connector suitable for connecting to an electronic device via, e.g., power cords with known and/or standard connector types, including, but not limited to, USB-A, USB-B, USB-C, micro USB, and/or Lightning connector types. In an exemplary embodiment, the second electrical connector 414 and the third electrical connector 416 may be the same type of connector. Alternatively, the second electrical connector 414 and the third electrical connector 416 may be different types of connectors. In an exemplary embodiment, the first electrical connector 314 may be a male connector configured to couple with an electronic device, and the second electrical connector 414 and the third electrical connector 416 may be female connectors for receiving the male end of a power cord of a device. In FIG. 4, the second electrical connector 414 and the third electrical connector 416 are provided on a same side of the first housing 302, but it will be understood that the disclosure is not limited to this positioning of the second electrical connector 414 and the third electrical connector 416 (see, e.g., FIG. 5 and FIG. 6) nor the number of connectors. Additionally, it will be understood that the disclosure is not limited to the second electrical connector 414 and the third electrical connector 416 being positioned on the outer surface 402 of the first housing 302. For example, one or both of the second electrical connector 414 and the third electrical connector 416 may be positioned on the recess surface 406 or the recess wall 408.

The first housing 302 may further include one or more screw holes 418. The screw holes 418 may allow for the first housing 302 to be secured to the furniture piece 102 using screws or other similar connector hardware such that the electrical connector assembly 106 and the first housing 302 may be mounted in a variety or orientations including horizontally on a headboard according to the exemplary embodiment.

FIG. 5 is a cutaway view of an alternate exemplary embodiment of the electrical connector assembly 106 in which the second electrical connector 414 and the third electrical connector 416 are provided in a different position. As seen in FIG. 5, the interior edge 404 may include an interior edge first end 502 and an interior edge second end 504, and the outer surface may include an outer surface first end 506 and an outer surface second end 508. The second electrical connector 414 may be positioned between the interior edge first end 502 and the outer surface first end 506, and the third electrical connector 416 may be positioned between the interior edge second end 504 and the outer surface second end 508.

FIG. 5 further shows that the first housing 302 may include a positioner 512 provided within the recess 410. As discussed with respect to FIG. 4 and the positioning portion 422 adjacent to the cord opening 412, the positioner 512 may be configured to position the first electrical connector 314 at a predetermined orientation when the first electrical connector 314 is in the retracted state, among other things. For example, the positioner 512 may hold the first electrical connector 314 at a predetermined angle with respect to the recess surface 406 so that the first electrical connector 314 can be easily grasped by a user. The positioner 512 may be placed on the recess surface 406 so as to cover the cord opening 412. In certain embodiments, a portion of the recess surface 406 adjacent to the cord opening 412 may be formed to bow or curve inwardly into the recess 410

As further seen in FIG. 5, the second housing 304 may define an interior space 510. At least a portion of the power cord 308 may be positioned within the interior space 510. For example, the cord retractor 310 may be positioned within the interior space 510 to retract and coil the power cord 308 when not in use.

In an aspect, the exemplary embodiments according to this disclosure may include a light source 514. The light source 514 may be in electrical communication with the circuit board 312 to receive power, and the circuit board 312 may also include components such as a processor and/or logic unit to control operation of the circuit board 312 and connected components. For example, the circuit board 312 may include or be in electrical communication with a sensor (not shown) configured to detect movement of the power cord 308, such as when the power cord 308 is extended by a user. The circuit board 312 may be configured to, in response to the movement of the power cord 308, illuminate the light source 514 to provide illumination of the surrounding area for a predetermined period of time. This may help the user to connect an electronic device to the first electrical connector 314 in an otherwise dark room. Additionally, the circuit board 312 may be configured to control the light source 514 such that the light source 514 illuminates when a device is electrically connected to the first electrical connector 314. Such an illumination may serve as confirmation that the device is electrically connected and properly charging. Additional light sources 514 may be provided within the recess 410 or on the outer surface 402 to indicate connection and/or charging via the second electrical connector 414 and/or the third electrical connector 416. The light source 514 and the first housing 302 may be configured to illuminate the second electrical connector 414 and/or the third electrical connector 416 to enable a user to find the second electrical connector 414 and the third electrical connector 416 in a dark environment.

One or more light sources 514 provided within the recess 410. As shown in FIG. 5, the light source 514 may be provided on any of the recess surface 406 or the recess wall 408, or alternatively on the outer surface 402 of the first housing 302. The type, number, and position of one or more light sources is not limited according to the exemplary or other embodiments. As a non-limiting example, the light source 514 may be one or more of a light emitting diode (LED), LED string, or any other known light source consistent with the disclosure.

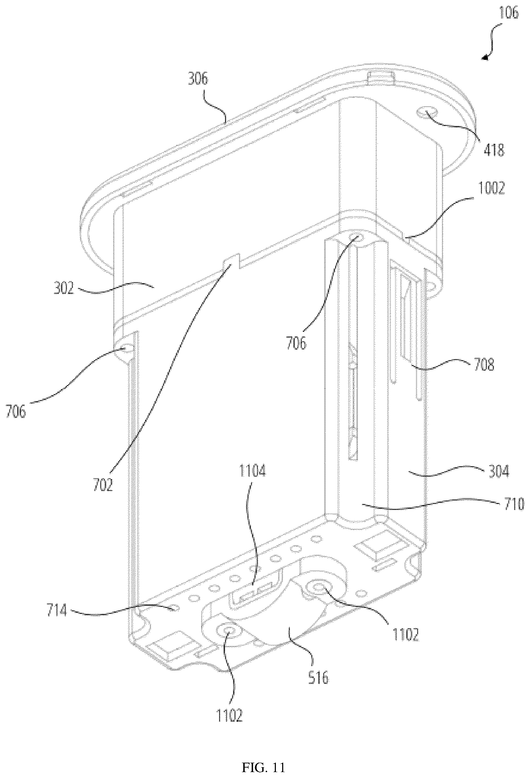

The second housing 304 may further include a retainer 516 fastened to a surface of the second housing 304. The retainer 516 may be operable to help hold the power source connector 318 in place when the electrical connector assembly 106 is assembled and installed in the furniture piece 102. The retainer 516 may be fastened to the second housing 304 with one or more retainer screws 1102 (see FIG. 11), or with resilient tabs, snap connectors, or similar structures.

FIG. 5 shows an exemplary embodiment of the electrical connector assembly 106 in the retracted state. In the retracted state, at least a portion of the first electrical connector 314 is positioned within the recess 410. While FIG. 5 shows the first electrical connector 314 completely within the recess 410, it will be understood that FIG. 5 is not necessarily to scale and that the first electrical connector 314 may be dimensioned such that a portion of the first electrical connector 314 may extend from the recess 410 in the retracted position.

FIG. 6 shows an exemplary embodiment of the electrical connector assembly 106 according to FIG. 5 with the power cord 308 in the extended state. In the extended state, the first electrical connector 314 and the power cord 308 are pulled by a user to a position at which the first electrical connector 314 may be connected to a device. It will be understood that length of extension of the power cord 308 is not limited to what is seen in FIG. 6, and that the power cord 308 may have a sufficient length to extend from the electrical connector assembly 106 to longer distances to give the user greater mobility and freedom of movement while using the power cord 308.

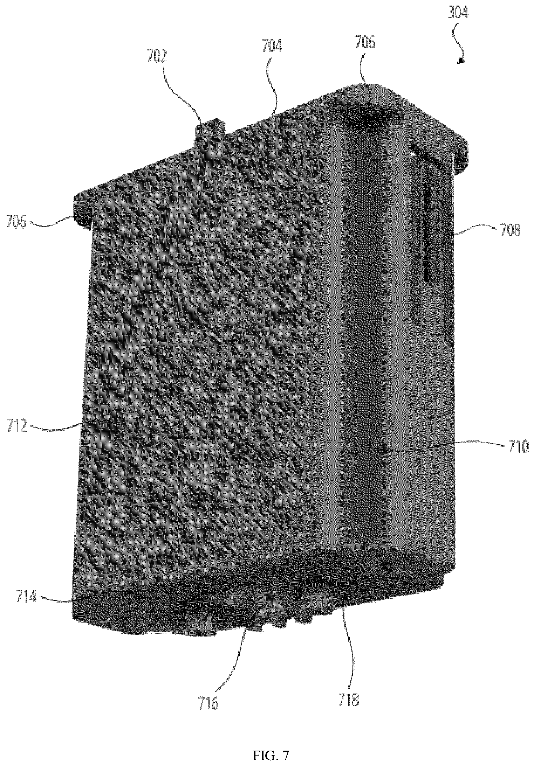

FIG. 7 shows an exemplary embodiment of the second housing 304. The second housing 304 may include one or more housing couplers for coupling the second housing 304 to the first housing 302. For example, the second housing 304 may include one or more connecting tabs 702 provided on an edge 704 of the second housing 304 and configured to couple with a corresponding structure on the first housing 302. Additionally, the second housing 304 may include one or more housing screw holes 706 so that the second housing 304 may be secured to the first housing 302 with one or more screws or other suitable connector hardware.

The second housing 304 may further include one or more furniture couplers configured to couple the electrical connector assembly 106 to the furniture piece 102. For example, one or more resilient locking tabs 708 may be provided on the second housing 304. The resilient locking tabs 708 may be configured to couple with a corresponding structure provided on the furniture piece 102. The second housing 304 may also include one or more alignment grooves 710 configured to couple with a corresponding projection provided in the interior 202 of the furniture piece 102. While FIG. 7 shows the furniture coupler as the alignment groove 710, it will be understood that the disclosure is not limited to this. For example, the second housing 304 may also include a projection (not shown) provided on an exterior surface 712 of the second housing 304 and configured to couple with a corresponding groove provided in the interior 202 of the furniture piece 102.

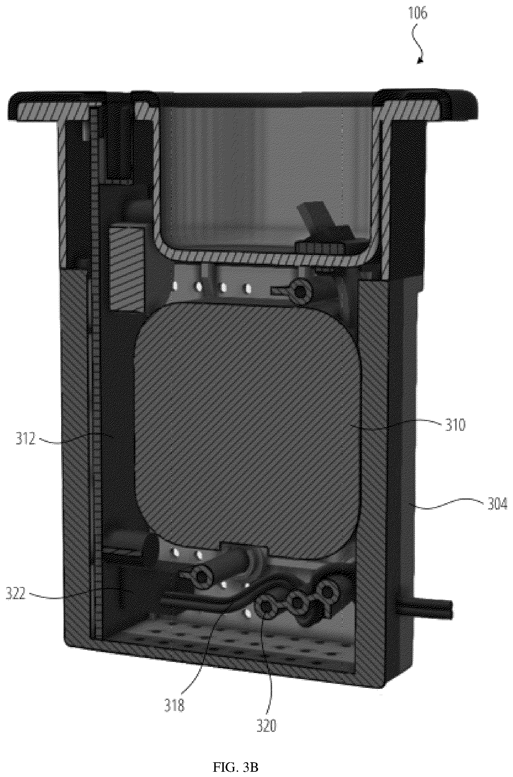

It will be understood that the second housing 304 may not completely close the interior space 510 from the exterior environment. For example, the second housing 304 may include one or more vent openings 714 configured to vent heat from electronic components included within the second housing 304 such as the circuit board 312. Additionally, a power access opening 716 may be provided on the second housing 304 to allow for passage of the power source connector 318 (See FIG. 3A, FIG. 3B). The power access opening 716 may allow the power source connector 318 to access the interior space 510 (see FIG. 5). It will be understood that a power source connector 318 or other connector extending into the interior space 510 from an external power supply or power source may be routed from the power access opening 716 to the circuit board 312 as particular configurations and applications demand and may include, for example, components such as the support drums 320 as previously discussed with reference to FIG. 3B.

FIG. 7 shows that the vent opening 714 and the power access opening 716 may be provided on a bottom surface 718 of the second housing 304, but it will be understood that the disclosure is not limited to this; the vent opening 714 and the power access opening 716 may be provided in any location or position on the second housing 304 as dictated by the particular design of the furniture piece 102 being used.

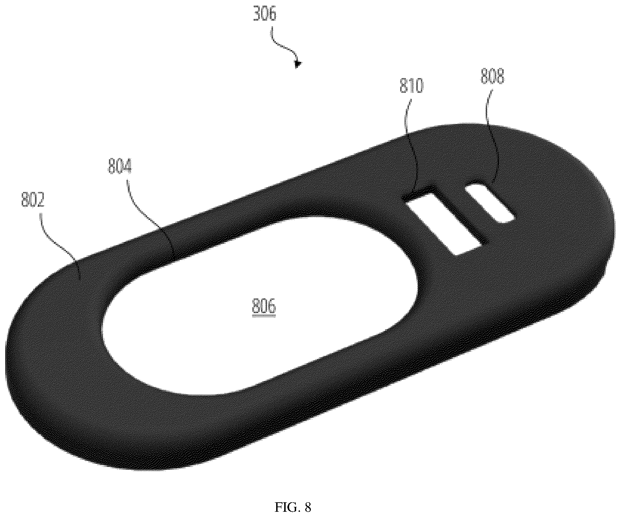

FIG. 8 shows an exemplary embodiment of the cover plate 306. The cover plate 306 may include a cover surface 802. The cover surface 802 may include a cover interior edge 804 that defines a cover recess opening 806 to allow access to the recess 410 of the first housing 302. The cover interior edge 804 may be beveled or rounded to help prevent accidental damage to the power cord 308. The cover plate 306 may also include a first connector opening 808 allow access through the cover plate 306 to the second electrical connector 414 and a second connector opening 810 to allow access through the cover plate 306 to the third electrical connector 416. In FIG. 8, the first connector opening 808 and the second connector opening 810 are shown adjacent to each other on a same side of the cover recess opening 806, but it will be understood that the disclosure is not limited to this. For example, in an embodiment in which the second electrical connector 414 and the third electrical connector 416 are provided on opposite sides of the recess 410 (e.g., see FIG. 5), the first connector opening 808 and the second connector opening 810 may be provided on opposite sides of the cover recess opening 806.

The cover plate 306 may be configured to couple to the first housing 302 by any suitable means, for example but not limited to, resilient clips, tabs, snaps, grooves, and/or projections. The cover plate 306 may be configured to cover the screw holes 418 of the first housing 302 in order to provide a clean aesthetic appearance on the furniture piece surface 104. Additionally, the cover surface 802 may be designed to match or complement the design of the furniture piece 102. For example, the cover surface 802 may be provided with a metallic, woodgrain, colored plastic, or patterned/colored fabric appears to match or complement the design and/or color of the underlying furniture piece 102 and/or furniture piece surface 104.

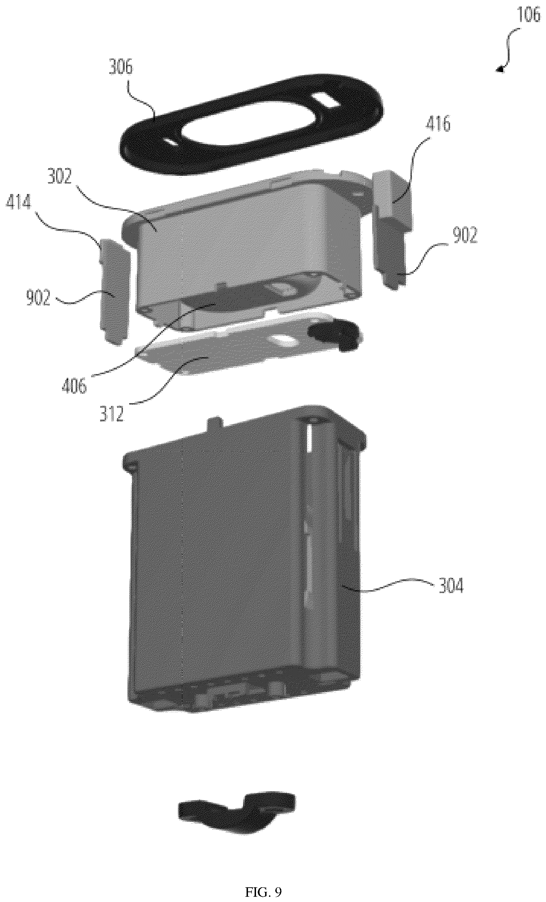

FIG. 9 shows an exploded view of an exemplary embodiment of the electrical connector assembly 106 according to FIG. 5 and FIG. 6. As shown in FIG. 9, the circuit board 312 is configured in a horizontal orientation, i.e., substantially parallel to the recess surface 406 between the first housing 302 and the second housing 304, in contrast with the embodiment of FIG. 3A, in which the circuit board 312 is in a vertical orientation; i.e., substantially perpendicular to the recess surface 406. FIG. 9 further shows that the electrical connector assembly 106 may include one or more secondary circuit boards 902 or other power connections configured to provide electrical communication between the circuit board 312 and the second electrical connector 414 and/or the third electrical connector 416. In certain embodiments, a power source connector may connect and provide power directly to one or more individual electrical connectors.

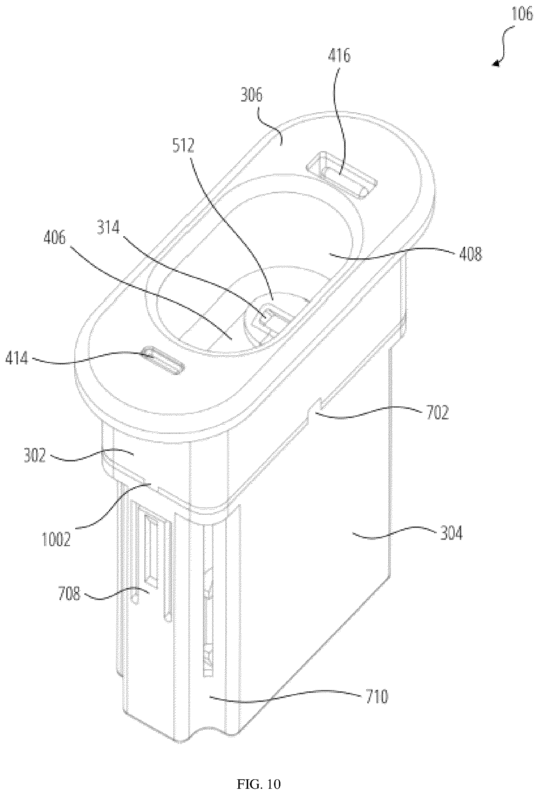

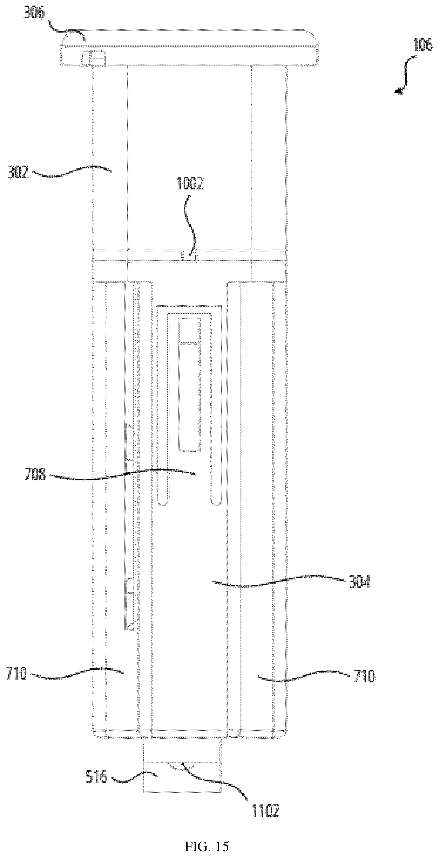

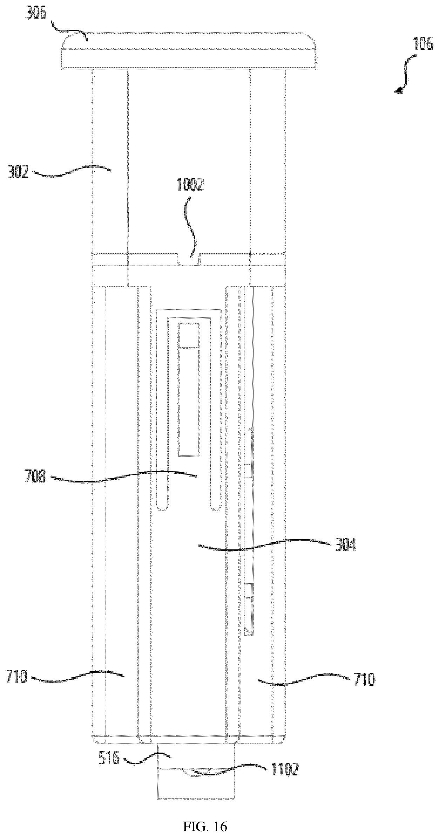

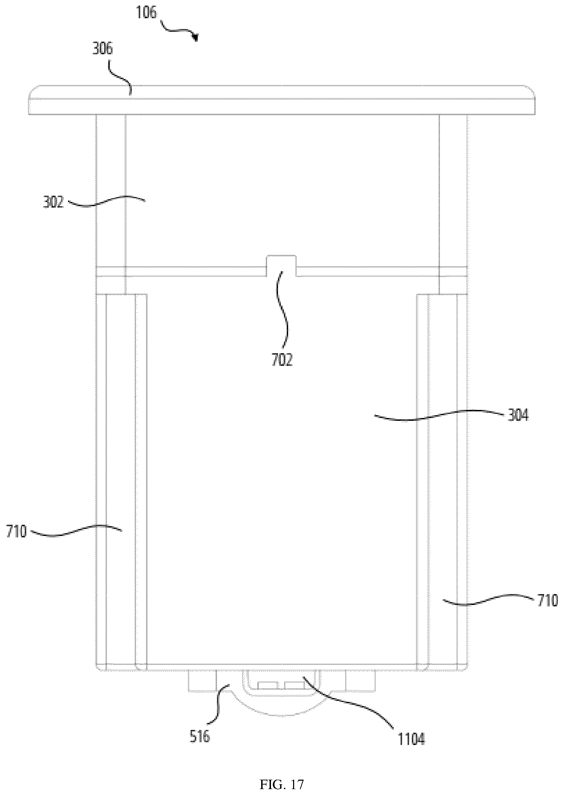

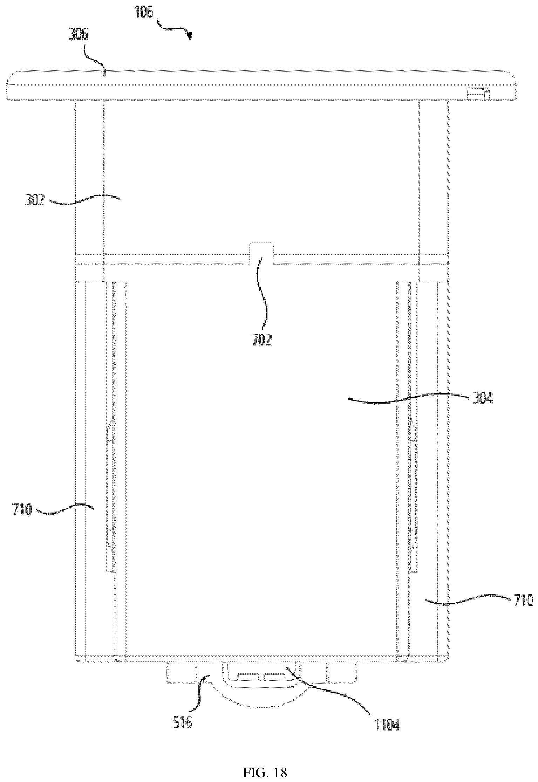

FIG. 10 through FIG. 18 illustrate additional views of an exemplary embodiment of the electrical connector assembly 106, with similar parts labeled similar to those in the preceding views. With reference to FIG. 10, the first housing 302 may also include one or more connecting tabs 1002 configured to couple the first housing 302 to the second housing 304. As seen in FIG. 10, the connecting tabs 1002 of the first housing 302 may be used in conjunction with the connecting tabs 702 of the second housing 304 to help ensure proper alignment and secure fit of the first housing 302 and the second housing 304.

With reference to FIG. 11, in an exemplary embodiment, the power source connector may be structured as a socket or receptacle configured to receive a corresponding plug or male connector from a power cord, such as a power input connector 1104 shown in FIG. 11. The socket/receptacle of the power input connector 1104 may be coupled to the circuit board 312 as described above. This configuration may help to provide a more secure and reliable connection between the power source connector 318 and the power source 110 and eliminate the risk of damaging or disconnecting a cord extending through the second housing 304.

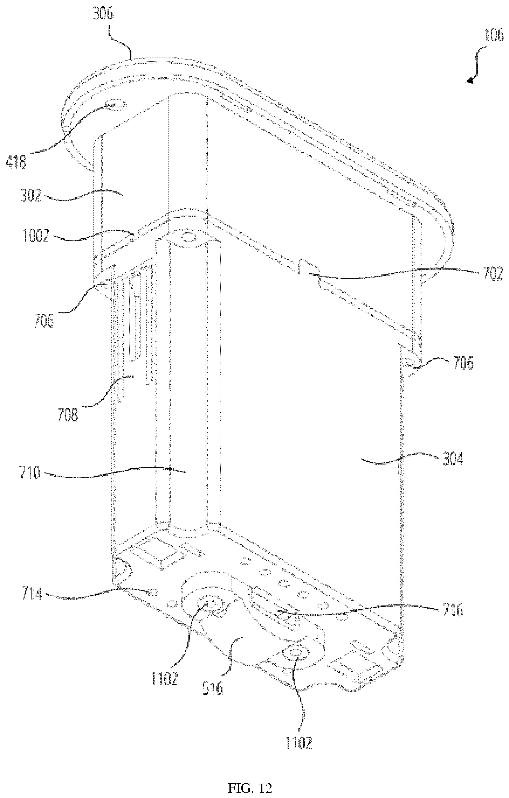

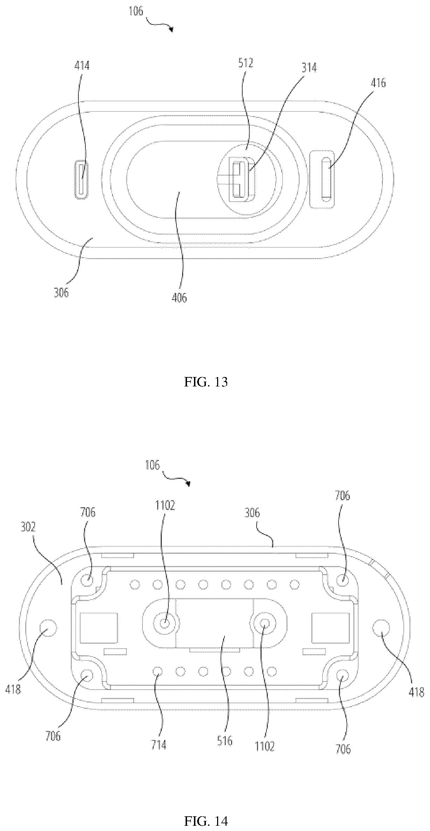

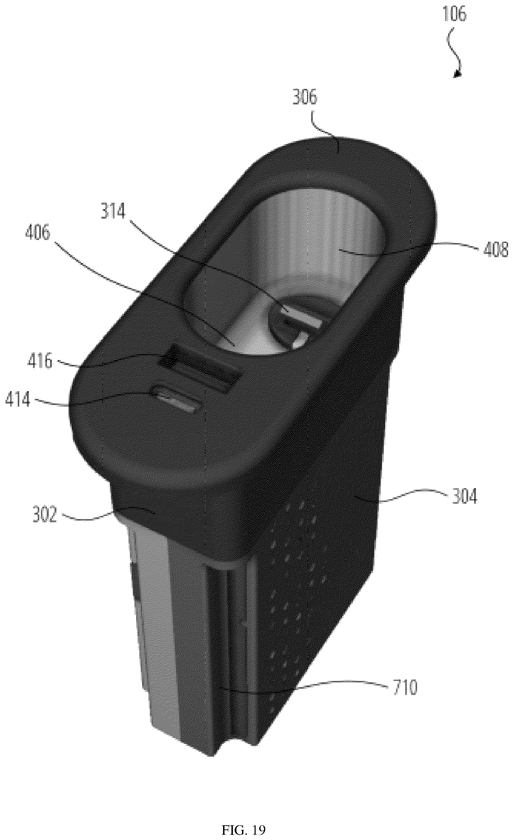

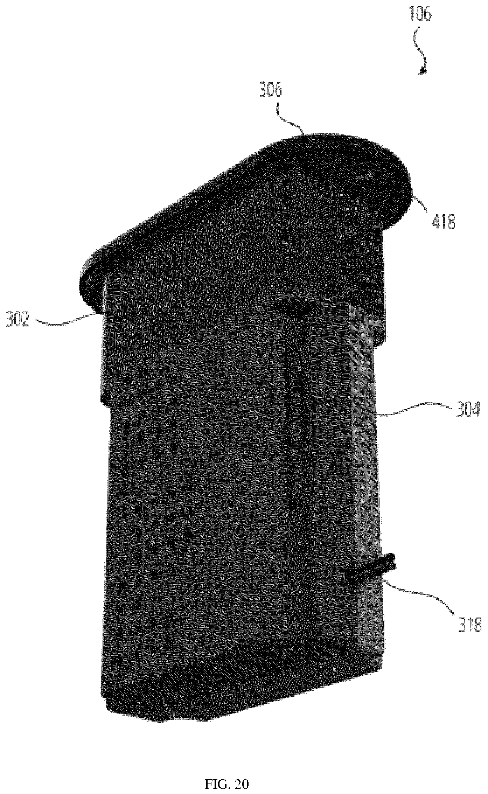

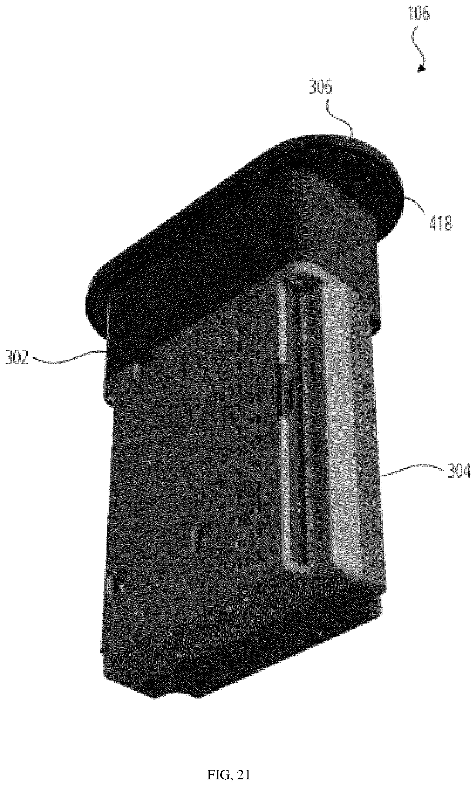

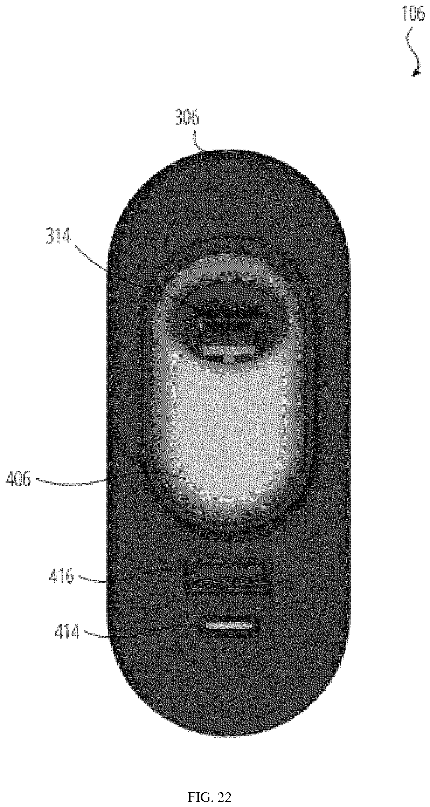

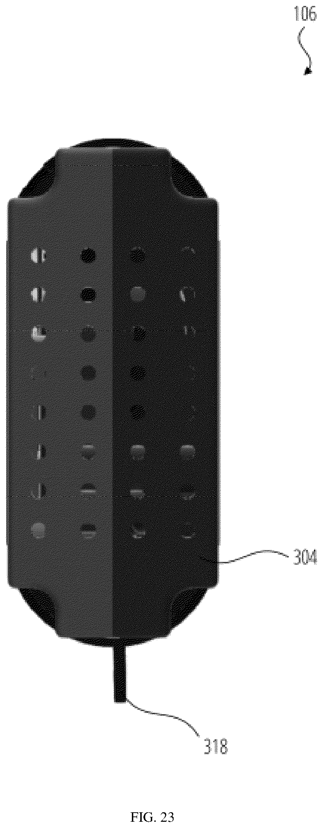

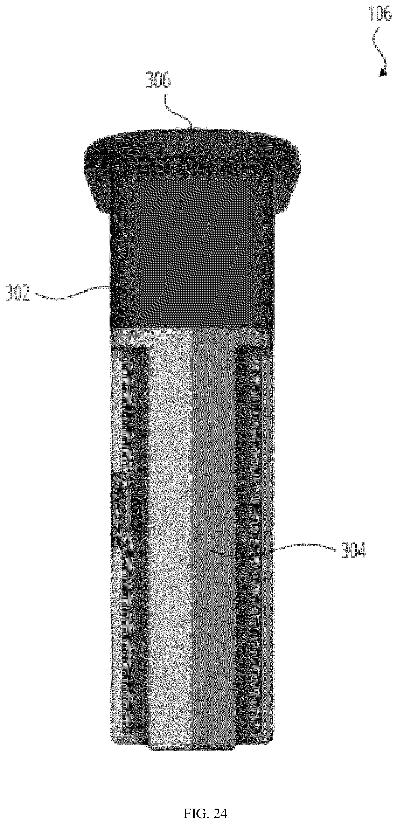

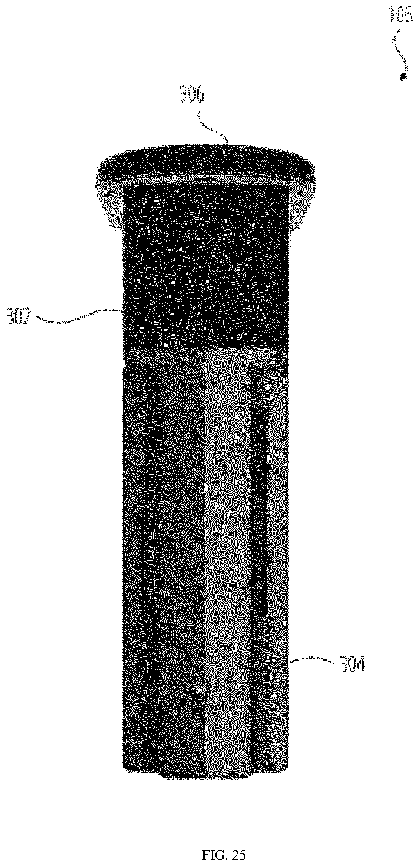

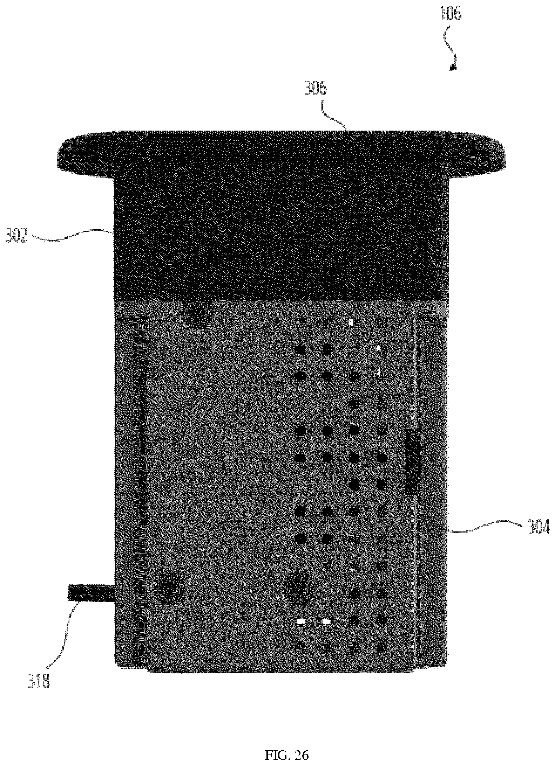

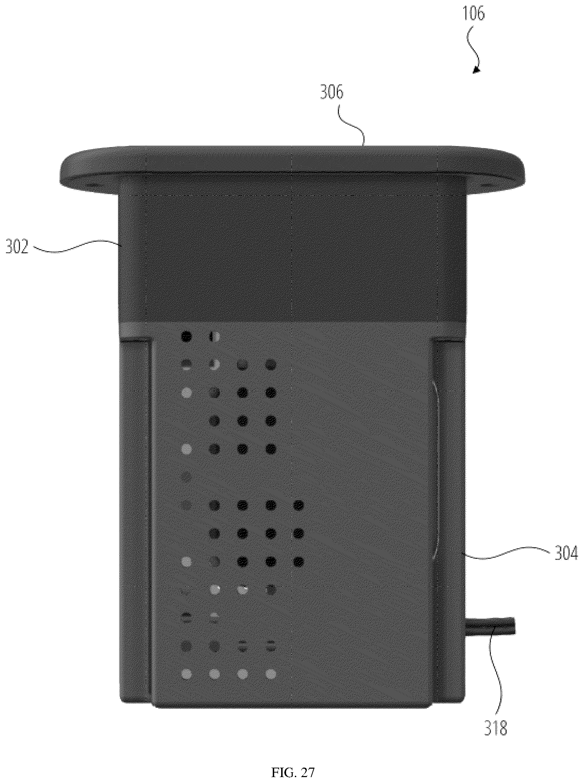

FIG. 19 through FIG. 27 illustrate additional views of an exemplary embodiment of the electrical connector assembly 106, with similar parts labeled similarly to those in the preceding views. With reference to FIG. 19 and FIG. 22, it will be seen that, in an exemplary embodiment, the second electrical connector 414 and the third electrical connector 416 may be provided on a same side of the recess 410 instead of being provided opposite sides of the recess 410 (compare FIG. 13 with FIG. 22, for example). Additionally, FIG. 22 shows that the recess 410 may be offset to one side of the electrical connector assembly 106, instead of centrally located (compare FIG. 13 and FIG. 22, for example). Further, with reference to FIG. 20 and FIG. 21, it may be understood that in an exemplary embodiment, the electrical connector assembly 106 may be attached to the furniture piece 102 via screws fastened through screw holes 418, without the need for tabs such as the resilient locking tab 708 shown in FIG. 12, for example.

The electrical connector assembly of the present disclosure is suitable for various furniture, and the installation is simple and help to keep the furniture surface aesthetically neat and visually appealing. It can be fixed and installed with screws or snap-fit, and a smooth sleeve can be added as needed to cover the screw position. Additionally, the electrical connector assembly of the present disclosure can help to eliminate wire clutter, thereby improving safety and aesthetic appeal of a space.

This disclosure, in various embodiments, configurations and aspects, includes components, methods, processes, systems, and/or apparatuses as depicted and described herein, including various embodiments, subcombinations, and subsets thereof. This disclosure contemplates, in various embodiments, configurations and aspects, the actual or optional use or inclusion of, e.g., components or processes as may be well-known or understood in the art and consistent with this disclosure though not depicted and/or described herein.

The phrases "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together.

Approximating language, as used herein throughout the specification and claims, may be applied to modify any quantitative representation that could permissibly vary without resulting in a change in the basic function to which it is related. Accordingly, a value modified by a term such as "about" or "approximately" is not to be limited to the precise value specified. Such approximating language may refer to the specific value and/or may include a range of values that may have the same impact or effect as understood by persons of ordinary skill in the art field. For example, approximating language may include a range of +/-10%, +/-5%, or +/-3%. The term "substantially" as used herein is used in the common way understood by persons of skill in the art field with regard to patents, and may in some instances function as approximating language. In some instances, the approximating language may correspond to the precision of an instrument for measuring the value.

In this specification and the claims that follow, reference will be made to a number of terms that have the following meanings. The terms "a" (or "an") and "the" refer to one or more of that entity, thereby including plural referents unless the context clearly dictates otherwise. As such, the terms "a" (or "an"), "one or more" and "at least one" can be used interchangeably herein. Furthermore, references to "one embodiment", "some embodiments", "an embodiment" and the like are not intended to be interpreted as excluding the existence of additional embodiments that also incorporate the recited features. Approximating language, as used herein throughout the specification and claims, may be applied to modify any quantitative representation that could permissibly vary without resulting in a change in the basic function to which it is related. Accordingly, a value modified by a term such as "about" is not to be limited to the precise value specified. In some instances, the approximating language may correspond to the precision of an instrument for measuring the value. Terms such as "first," "second," "upper," "lower" etc. are used to identify one element from another, and unless otherwise specified are not meant to refer to a particular order or number of elements.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances the modified term may sometimes not be appropriate, capable, or suitable. For example, in some circumstances an event or capacity can be expected, while in other circumstances the event or capacity cannot occur - this distinction is captured by the terms "may" and "may be."

As used in the claims, the word "comprises" and its grammatical variants logically also subtend and include phrases of varying and differing extent such as for example, but not limited thereto, "consisting essentially of" and "consisting of." Where necessary, ranges have been supplied, and those ranges are inclusive of all sub-ranges therebetween. It is to be expected that the appended claims should cover variations in the ranges except where this disclosure makes clear the use of a particular range in certain embodiments.

The terms "determine", "calculate," and "compute," and variations thereof, as used herein, are used interchangeably and include any type of methodology, process, mathematical operation or technique.

This disclosure is presented for purposes of illustration and description. This disclosure is not limited to the form or forms disclosed herein. In the Detailed Description of this disclosure, for example, various features of some exemplary embodiments are grouped together to representatively describe those and other contemplated embodiments, configurations, and aspects, to the extent that including in this disclosure a description of every potential embodiment, variant, and combination of features is not feasible. Thus, the features of the disclosed embodiments, configurations, and aspects may be combined in alternate embodiments, configurations, and aspects not expressly discussed above. For example, the features recited in the following claims lie in less than all features of a single disclosed embodiment, configuration, or aspect. Thus, the following claims are hereby incorporated into this Detailed Description, with each claim standing on its own as a separate embodiment of this disclosure.

Advances in science and technology may provide variations that are not necessarily express in the terminology of this disclosure although the claims would not necessarily exclude these variations.

## Claims

1. An electrical connector assembly for use with a furniture piece, the electrical connector assembly comprising:
a first housing defining a recess; and
a power cord having a cord first end and switchable between a retracted state and an extended state; wherein
the cord first end comprises a first electrical connector;
in the retracted state, at least a portion of the first electrical connector is positioned within the recess; and
in the extended state, the cord first end is extended at least partially outside of the recess.

2. The electrical connector assembly of claim 1, wherein:
the first housing comprises:
an outer surface comprising an interior edge defining a recess opening;
a recess surface displaced from the outer surface in a first direction; and
a recess wall extending between the interior edge and the recess surface;
the recess surface and the recess wall define the recess.

3. The electrical connector assembly of claim 2, wherein the first housing further comprises a second electrical connector.

4. The electrical connector assembly of claim 3, wherein:
the first housing further comprises a third electrical connector.

5. The electrical connector assembly of claim 4, wherein:
the outer surface comprises an outer surface first end and an outer surface second end;
the interior edge comprises an interior edge first end and an interior edge second end opposite the interior edge first end;
the second electrical connector is positioned between the interior edge first end and the outer surface first end; and
the third electrical connector is positioned between the interior edge second end and the outer surface second end.

6. The electrical connector assembly of claim 2, further comprising a cord opening formed through the recess surface;
wherein the power cord extends through the cord opening.

7. The electrical connector assembly of claim 6, further comprising a second housing coupled to the first housing, the second housing defining an interior space;
wherein at least a portion of the power cord is positioned within the interior space.

8. The electrical connector assembly of claim 7, wherein the second housing comprises a furniture coupler configured to couple to the furniture piece.

9. The electrical connector assembly of claim 7, further comprising a cord retractor provided in the second housing and configured to retract the power cord into the interior space.

10. The electrical connector assembly of claim 2, further comprising a positioner provided within the recess and configured to position the first electrical connector at a predetermined orientation within the recess.

11. The electrical connector assembly of claim 1, wherein:
the first housing further comprises a light source; and
the light source is configured to illuminate in response to a movement of the power cord.

12. The electrical connector assembly of claim 1, wherein:
the housing further comprises a light source; and
the light source is configured to illuminate in response to a device being electrically connected to the first electrical connector.

13. A furniture piece comprising:
a power source;
a furniture piece surface; and
an electrical connector assembly inserted into the furniture piece surface, the electrical connector assembly comprising:
a first housing defining a recess; and
a power cord having a cord first end and switchable between a retracted state and an extended state; wherein
the cord first end comprises a first electrical connector;
the power cord is electrically coupled to the power source;
in the retracted state, at least a portion of the first electrical connector is positioned within the recess; and
in the extended state, the cord first end is extended at least partially outside of the recess.

14. The furniture piece of claim 13, wherein:
the first housing comprises:
an outer surface comprising an interior edge defining a recess opening;
a recess surface displaced from the outer surface in a first direction; and
a recess wall extending between the interior edge and the recess surface;
the recess surface and the recess wall define the recess.

15. The furniture piece of claim 13, further comprising:
a second housing coupled to the first housing, the second housing defining an interior space, at least a portion of the power cord being positioned within the interior space; and
a cord retractor provided in the second housing and configured to retract the power cord into the interior space.

## Amended claims

### Amended claims in accordance with Rule 137(2) EPC.

1. An electrical connector assembly (106) for use with a furniture piece (102), the electrical connector assembly (106) comprising:
a first housing (302) defining a recess (410); and
a power cord (308) having a cord first end (316) and switchable between a retracted state and an extended state; wherein
the cord first end (316) comprises a first electrical connector (314);
in the retracted state, at least a portion of the first electrical connector (314) is positioned within the recess (410); and
in the extended state, the cord first end (316) is extended at least partially outside of the recess (410);
wherein the first housing (302) comprises:
an outer surface (402) comprising an interior edge (404) defining a recess opening (420);
a recess surface (406) displaced from the outer surface (402) in a first direction; and
a recess wall (408) extending between the interior edge (404) and the recess surface (406);
wherein the recess surface (406) and the recess wall (408) define the recess (410);
wherein the electrical connector assembly (106) further comprises a cord opening (412) formed through the recess surface (406); wherein the power cord (308) extends through the cord opening (412);
**characterized in that**:
wherein the electrical connector assembly (106) further comprises a positioner (512) disposed within the recess (410) and configured to position the first electrical connector (314) at a predetermined orientation within the recess (410), wherein the positioner (512) is disposed on the recess surface (406) and covers the cord opening (412) and is configured to hold the first electrical connector (314) at a predetermined inclined angle with respect to the recess surface (406) so that the first electrical connector (314) is able to be easily grasped by a user, and wherein a portion of the recess surface (406) adjacent to the cord opening (412) is formed to bow or curve inwardly into the recess (410);
wherein the electrical connector assembly (106) comprises at least one selected from the group consisting of a USB-A, USB-B, USB-C, micro-USB, and Lightning connector.

2. The electrical connector assembly (106) of claim 1, wherein the first housing (302) further comprises a second electrical connector (414).

3. The electrical connector assembly (106) of claim 2, wherein:
the first housing (302) further comprises a third electrical connector (416).

4. The electrical connector assembly (106) of claim 3, wherein:
the outer surface (402) comprises an outer surface first end (506) and an outer surface second end (508);
the interior edge (404) comprises an interior edge first end (502) and an interior edge second end (504) opposite the interior edge first end (502);
the second electrical connector (414) is positioned between the interior edge first end (502) and the outer surface first end (506); and
the third electrical connector (416) is positioned between the interior edge second end (504) and the outer surface second end (508).

5. The electrical connector assembly (106) of claim 1, further comprising a second housing (304) coupled to the first housing (302), the second housing (304) defining an interior space (510);
wherein at least a portion of the power cord (308) is positioned within the interior space (510).

6. The electrical connector assembly (106) of claim 5, wherein the second housing (304) comprises a furniture coupler configured to couple to the furniture piece (102).

7. The electrical connector assembly (106) of claim 5, further comprising a cord retractor (310) provided in the second housing (304) and configured to retract the power cord (308) into the interior space (510).

8. The electrical connector assembly (106) of claim 1, wherein:
the first housing (302) further comprises a light source (514); and
the light source (514) is configured to illuminate in response to a movement of the power cord (308).

9. The electrical connector assembly (106) of claim 1, wherein:
the housing further comprises a light source (514); and
the light source (514) is configured to illuminate in response to a device being electrically connected to the first electrical connector.

10. The electrical connector assembly (106) of claim 5, further comprising a power source connector (318) configured to couple to a power source (110) of the furniture piece (102) or a stand-alone power source (110) and supply power to the power cord (308) and the first electrical connector; wherein the power source connector (318) is in electrical communication with the circuit board (312);
wherein the power source connector (318) extends into an interior of the second housing (304), wherein within the second housing (304) the power source connector (318) is routed around one or more support drums (320) and electrically connected to a circuit board (312) power input on the circuit board (312); wherein the one or more support drums (320) are configured to secure the power source connector (318) so that a tension on the power source connector (318) is prevented from disconnecting the power source connector (318) from the circuit board power input, and are further configured to support the power source connector (318) so that the a tension and/or movement is prevented from causing damage against the power source connector (318) by preventing wear of the power source connector (318) against an edge of the second housing (304) or the furniture piece (102).

11. The electrical connector assembly (106) of claim 1, wherein the interior edge (404) is beveled or rounded so as to reduce possible damage to the power cord (308).

12. The electrical connector assembly (106) of claim 1, wherein at least one of the first electrical connector and the first housing (302) comprises a magnet, and wherein another of the first electrical connector and the first housing (302) comprises a metal or otherwise magnetically active material, so that the first electrical connector is magnetically coupled to a surface of the first housing (302) to retail the first electrical connector in a convenient position when not in use.

13. The electrical connector assembly (106) of claim 1, wherein the second housing (304) further comprises one or more alignment grooves (710) configured to couple with a corresponding projection disposed in an interior of the furniture piece (102).

14. The electrical connector assembly (106) of claim 1, wherein the second housing (304) further comprises a projection disposed on an exterior surface (712) of the second housing (304) and configured to couple with a corresponding groove defined in an interior of the furniture piece (102).

15. A furniture piece (102) comprising:
a power source (110);
a furniture piece surface (104); and
an electrical connector assembly (106) of any one of claims 1 to 14, wherein the electrical connector assembly (106) is inserted into the furniture piece surface (104)
